# EUROPÄISCHE PATENTSCHRIFT

(11) **EP 1 357 366 B1**
(45) Veröffentlichungstag und Bekanntmachung des Hinweises auf die Patenterteilung: **07.06.2006**
(21) Anmeldenummer: 03006653.4
(22) Anmeldetag: 25.03.2003
(51) Int. Cl.: G01F 23/22

(54) **Ermittlung eines Füllstands mit einem rotierendem Element**
Filling level determination using a rotating element
Détermination du niveau de remplissage avec un élément rotatif

(30) Priorität: 22.04.2002 DE 10217837
(43) Veröffentlichungstag der Anmeldung: 29.10.2003
(73) Patentinhaber: MAIHAK AG, 22399 Hamburg (DE)
(72) Erfinder: Baljöhr, Thomas, 22089 Hamburg (DE)
(74) Vertreter: Manitz, Finsterwald & Partner GbR

(56) Entgegenhaltungen:
- DE-A- 3 321 815
- DE-C- 876 167
- US-A- 2 647 251

## Beschreibung

Die vorliegende Erfindung betrifft ein Verfahren zur Ermittlung eines Füllstands von Schüttgut in einem Schüttgutbehälter unter Verwendung einer Antriebsvorrichtung mit einem Abtriebselement und eines wenigstens teilweise in einem Schüttgutbereich des Schüttbehälters angeordneten, mit dem Abtriebselement gekoppelten Drehflügels sowie eine entsprechende Vorrichtung.

Schüttgüter wie beispielsweise Kunststoffpulver bzw. -granulate, Getreide, Sojabohnen, Holzspäne oder auch Steinkohle werden häufig in entsprechenden Schüttgutbehältern wie z.B. Bunkern oder Silos gelagert. Insbesondere beim Befüllen solcher Schüttgutbehälter ist es notwendig, das Erreichen eines vorgegebenen, z. B. maximalen Füllstands zu erkennen, um eine weitere Befüllung des Schüttgutbehälters stoppen und ein Überfüllen verhindern zu können.

Ein Füllstandsmelder zur Erkennung eines vorgegebenen Füllstandes ist beispielsweise in US 2,851,553 beschrieben. Bei diesem Füllstandsmelder wird ein Drehflügel, der im Bereich des vorgegebenen Füllstandes angeordnet ist, von einem Motor gedreht, der selbst drehbar gelagert ist. Bei Erreichen des vorgegebenen Füllstandes wird die Drehbewegung des Drehflügels durch das Schüttgut gehemmt, so dass sich der drehbar gelagerte Motor in entgegengesetzter Drehrichtung dreht. Bei dieser gegenläufigen Drehbewegung betätigt der Motor einen Schalter, mit dem entsprechende andere Einrichtungen, beispielsweise zum Befüllen, ein- und ausschaltbar sind.

Solche Füllstandsmelder haben jedoch verschiedene Nachteile.

So kann eine falsche Voll- oder Leermeldung bzw. ein falscher Schaltvorgang erfolgen, wenn Schüttgut beispielsweise einseitig auf den Drehflügel auftrifft und diesen zusammen mit dem Motor entgegen der durch den Motor vorgegebenen Drehrichtung dreht, so dass der Schalter betätigt wird.

Zur Beseitigung dieses Nachteils wird in DE 7813153 U1 vorgeschlagen, einen zeitverzögerten Mikroschalter zu verwenden, der durch den Motor betätigbar ist. Eine kurzzeitige Änderung der Drehrichtung der Drehflügelwelle löst dann nicht direkt eine Betätigung einer durch den Schalter gesteuerten Einrichtung aus, so dass zumindest kurzzeitige Abweichungen der Drehrichtung von der durch den Motor vorgegebenen Drehrichtung nicht zu einer Voll- oder Leermeldung führen. In US 4,695,685 wird zur Beseitigung des Nachteils eine aufwändige mechanische Lösung vorgeschlagen. Bei beiden Lösungsvorschlägen erfordert die Beseitigung des Nachteils einen relativ hohen konstruktiven Aufwand und kann darüber hinaus eine falsche Voll- oder Leermeldung nicht in allen Fällen verhindern.

Ein weiterer Nachteil solcher bekannter Füllstandsmelder besteht darin, dass die Gefahr des Überfüllens eines Schüttgutbehälters nicht erkannt wird, wenn z.B. der Füllstandsmelder durch Stromausfall oder eine Funktionsstörung, insbesondere des Motors, nicht richtig funktioniert. In US 4,392,032 wird zur Vermeidung dieses Nachteils eine störanfällige Zusatzelektronik vorgeschlagen, um eine ansonsten möglichst ausfallsichere Funktion zu gewährleisten.

Weiterhin wird, um die Mechanik der bekannten Füllstandsmelder nicht zu beschädigen, bei Eintauchen des Drehflügels in das Schüttgut der Motor parallel zum Schaltkontakt für die Zustandsmeldung ausgeschaltet. Damit entfällt dann eine Erwärmung des Füllstandsmelders durch die Wärme des Motors. Dies birgt die Gefahr einer Kondensatbildung im Anzeigekopf des Füllstandsmelders. Zur Vermeidung dieses Risikos wird in US 5,164,555 vorgeschlagen, eine zusätzliche Heizung in den Füllstandsmelder zu integrieren, die bei Abschalten des Motors eingeschaltet wird. Der Einbau einer solchen Zusatzheizüng erfordert jedoch zusätzlichen konstruktiven Aufwand.

Darüber hinaus weisen solche bekannten Füllstandsmelder viele bewegte, nicht verschleißfreie Teile auf, die die Betriebssicherheit der bekannten Füllstandsmelder reduzieren.

So wurde zum Schutz des Antriebs des Drehflügels die Verwendung aufwändiger mechanischer, durch Federkraft wirkender Rutschkupplungen zwischen Welle und Getriebe des Antriebsmotors, beispielsweise beschrieben in US 4,147,906, vorgeschlagen. Das Auslösedrehmoment der Rutschkupplung muss dabei zur Sicherstellung der Funktion des Füllstandsmelders so hoch liegen, dass eine Rückdrehung des Motors bei Hemmung der Drehflügelbewegung durch Schüttgut und damit eine Betätigung des Schalters nicht beeinträchtigt wird.

Ein weiterer Nachteil der bekannten Füllstandsmelder besteht darin, dass für die freie Drehung des Motors und den von dem Motor betätigten Schalter zusätzlicher Platz erforderlich ist, der zu einer unnötigen Vergrößerung des Gesamtaufbaus führt.

Sollen darüber hinaus mehrere Einrichtungen bei Erreichen oder Verlassen des Füllstands geschaltet werden, müssen immer zusätzliche Mikroschalter installiert werden, die alle parallel mechanisch von dem Motor bewegt werden müssen.

Die bekannten Füllstandsmelder weisen daher eine komplizierte, für Ausfälle und Verschleiß anfällige Konstruktion auf, die in der Herstellung aufwändig ist. Trotzdem funktionieren die bekannten Füllstandsmelder in vielen Anwendungsfällen nicht ausreichend betriebssicher.

DE 33 21 815 A beschreibt die Ermittlung des Füllstandes schwerfallig fließender Güter. Die Abtriebswelle eines Motors ist starr mit einer Fühlerwelle verbunden, die ein Paddel trägt. Eine Drehscheibe, die auf der Fühlerwelle mittels eines Kugellagers gehalten ist, wirkt als Drehflügelsensor. Im freien Betrieb dreht sich das Paddel angetrieben durch den Synchronmotor. Bei einer Blockade des Paddels wird der Motor gebremst.

DE 876 167 C beschreibt einen Bunkerstandsanzeiger. Der Antriebsmotor ist außerhalb eines Vorratsbehälters angeordnet und über eine magnetische Kupplung mit einem Flügelrad verbunden. Bei Blockade der Flügel wird der Antriebsmotor still gestellt.

US-A-2,647,251 zeigt einen Füllstandssensor in Form eines angetriebenen Flügelrades. Wird das Flügelrad blockiert, wird in Spulen, die auf Pole gewickelt sind, eine Spannung induziert, die zur Flüssigkeitsstandsmessung herangezogen wird.

Der vorliegenden Erfindung liegt die Aufgabe zugrunde, ein Verfahren zur Ermittlung eines Füllstandes von Schüttgut in einem Schüttgutbehälter bereitzustellen, das mit einer mechanisch einfachen und wenig verschleißanfälligen Vorrichtung durchführbar ist, sowie eine entsprechende Vorrichtung zu schaffen.

Diese Aufgabe wird mit einem Verfahren zur Ermittlung eines Füllstandes von Schüttgut in einem Schüttgutbehälter mit den Merkmalen des Anspruches 1 und einer Vorrichtung zur Ermittlung eines Füllstandes von Schüttgut in einem Schüttgutbehälter mit den Merkmalen des Anspruches 4 gelöst. Vorteilhafte Ausgestaltungen sind Gegenstand von Unteransprüchen.

Bei dem erfindungsgemäßen Verfahren wird zur Ermittlung eines Füllstands eine durch Schüttgut bei einem vorgegebenen Füllstand in dem Schüttgutbehälter hemmbare Drehbewegung eines Drehflügels überwacht.

Dazu wird der Drehflügel wenigstens teilweise in einem einem vorgegebenen Füllstand entsprechenden Schüttgutbereich des Schüttgutbehälters angeordnet.

Bei dem Drehflügel kann es sich, insbesondere auch bei der erfindungsgemäßen Vorrichtung, um beliebige drehbare Gebilde handeln, die wenigstens einen von einer Drehachse des Drehflügels seitlich abstehenden Arm bzw. eine seitlich abstehende Fläche aufweisen, wobei die Größe und Form der seitlich abstehenden Fläche bzw. des seitlich abstehenden Arms in Bezug auf das vorgegebene Schüttgut so gewählt ist, dass durch das Schüttgut die Drehbewegung des Drehflügels hemmbar ist.

Der Drehflügel kann bei der Durchführung des Verfahrens grundsätzlich in beliebigen Ausrichtungen gegenüber dem Schüttgutbehälter angeordnet sein. Insbesondere kann die Drehachse des Drehflügels horizontal oder senkrecht angeordnet sein.

Zur Bewegung des Drehflügels ist eine Antriebsvorrichtung vorgesehen, deren Drehmoment über ein drehbares Abtriebselement, beispielsweise eine Abtriebswelle, abgegeben wird und die insbesondere einen Elektromotor aufweisen kann. Die Antriebsvorrichtung kann über einen Motor hinaus noch andere Drehmoment übertragende Einrichtungen wie zum Beispiel ein Getriebe aufweisen.

Bei dem erfindungsgemäßen Verfahren und der erfindungsgemäßen Vorrichtung sind zur Drehung des Drehflügels das Abtriebselement der Antriebsvorrichtung und der Drehflügel mittels einer Rutschkupplung mit einem vorgegebenen Auslösedrehmoment gekoppelt. Unter dem Auslösedrehmoment wird dabei ein Drehmoment verstanden, ab dem eine vorgegebene signifikante Reduktion des durch die Rutschkupplung übertragbaren Drehmoments, insbesondere um mehr als 90%, auftritt.

Die Rutschkupplung ist dabei, insbesondere durch Wahl des vorgegebenen Auslösedrehmoments, so ausgebildet, dass zum einen der Drehflügel von der Antriebsvorrichtung drehbar ist, wenn das Schüttgut den Füllstand noch nicht erreicht hat und damit eine Hemmung der Bewegung des Drehflügels nicht eintritt, und zum anderen der Drehflügel von der Antriebsvorrichtung wenigstens teilweise abgekoppelt wird, wenn eine Hemmung der Drehbewegung des Drehflügels durch Schüttgut bei dem vorgegebenen Füllstand eintritt. Das Auslösedrehmoment wird daher insbesondere in Abhängigkeit von den Eigenschaften des Schüttguts, beispielsweise dessen Form und Schüttdichte, und der Ausbildung des Drehflügels, insbesondere dessen Form und Größe gewählt.

Die Rutschkupplung dient somit erfindungsgemäß dazu, durch Vorgabe des Auslösedrehmoments, ab dem eine signifikante Reduktion der Übertragung eines Drehmoments eintritt, festzulegen, ab welchem Widerstand gegen eine Drehbewegung des Drehflügels und damit welcher Änderung der Drehbewegung des Drehflügels eine Hemmung feststellbar ist.

Die Überwachung der Drehbewegung des Drehflügels bei dem erfindungsgemäßen Verfahren kann unter Erfassung und Bildung eines entsprechenden Drehflügeldrehsignals erfolgen. Bei der erfindungsgemäßen Vorrichtung ist dazu zum einen wenigstens ein Drehflügeldrehsensor zur Ermittlung einer Winkelstellung und/oder Drehbewegung des Drehflügels und zur Ausgabe entsprechender Drehflügelsignale vorgesehen. Bei diesem Drehflügeldrehsensor kann es sich grundsätzlich um beliebige zur Ermittlung einer Drehbewegung geeignete Drehsensoren handeln. Beispielsweise können hierzu Drehzahlsensoren oder auch Winkelstellungssensoren verwendet werden. Die Drehsensoren können dabei insbesondere an einer Welle zum Antrieb des Drehflügels bzw. dem Drehflügel selbst oder einem entsprechenden Abtriebselement der Rutschkupplung angeordnet sein.

Zum anderen ist in der erfindungsgemäßen Vorrichtung eine mit dem Drehflügeldrehsensor verbundene elektrische oder elektronische Überwachungsschaltung vorgesehen, mittels derer die Drehflügeldrehsignale des Drehflügeldrehsensors und damit die Drehbewegung des Drehflügels überwachbar sind.

Bei Erkennung einer Hemmung der Drehbewegung des Drehflügels wird ein entsprechendes Schaltsignal gebildet. Eine Hemmung der Drehbewegung kann dabei anhand vorgegebener Kriterien erfolgen. Eine Hemmung kann dann erkannt werden, wenn die Drehgeschwindigkeit des Drehflügels bzw. deren Betrag einen auf eine vorgegebene Soll-Drehgeschwindigkeit bezogenen relativen Wert unterschreitet. Alternativ kann überwacht werden, ob sich die Drehgeschwindigkeit des Drehflügels um einen auf eine vorgegebene Soll-Drehgeschwindigkeit bezogenen relativen Betrag ändert. Die Soll-Drehgeschwindigkeit kann dabei beispielsweise in Bezug auf die Antriebsvorrichtung bzw. die Drehgeschwindigkeit des Abtriebselements vorgegeben sein. Diese Kriterien können in Abhängigkeit von der gewählten Rutschkupplung festgelegt werden.

Zur Durchführung der Hemmungserkennung ist bei der erfindungsgemäßen Vorrichtung die Überwachungsschaltung weiterhin so ausgebildet, dass mit ihr in Abhängigkeit von den Drehflügeldrehsignalen des Drehflügeldrehsensors, d.h. insbesondere in Abhängigkeit von der erfassten Drehbewegung, ein Schaltsignal entsprechend dem Füllstand bildbar ist. Dieses Signal ist dann zur Ausführung von Steuerungsvorgängen ausgebbar oder direkt zur Durchführung von Schaltvorgängen innerhalb der Überwachungsschaltung verwendbar.

Durch die unmittelbare Überwachung der Drehbewegung des Drehflügels bei dem erfindungsgemäßen Verfahren kann die Füllstandsermittlung mit mechanisch sehr einfachen Mitteln zuverlässig erfolgen. Insbesondere braucht die erfindungsgemäße Vorrichtung keinen drehbaren Motor sowie entsprechende von dem Motor zu betätigende und daher einem erheblichen Verschleiß ausgesetzten Schalter aufzuweisen. Sie kann daher eine geringe Baugröße aufweisen.

Weiterbildungen und bevorzugte Ausführungsformen der Erfindung werden in der Beschreibung, den Ansprüchen und den Zeichnungen beschrieben.

Bevorzugt ist die Antriebsvorrichtung unbeweglich gehalten. Bei der erfindungsgemäßen Vorrichtung ist dazu bevorzugt eine Halterung vorgesehen, in der die Antriebsvorrichtung unbeweglich gehalten ist. Hierdurch ergibt sich ein besonders einfacher Aufbau der, insbesondere erfindungsgemäßen, Vorrichtung zur Durchführung des Verfahrens, da auf eine entsprechende Lagerung der Antriebsvorrichtung und, bei der Verwendung eines Elektromotors, auf eine bewegliche Kontaktierung verzichtet werden kann.

Darüber hinaus baut eine solche Vorrichtung auch besonders klein, da von dem Motor zu betätigende Schalter und Bewegungsraum für die Bewegung des Motors entfallen können. Eine solche Ausbildung der Vorrichtung wird erst durch die erfindungsgemäße, unmittelbare Überwachung der Drehbewegung des Drehflügels sinnvoll ermöglicht.

Um eine Änderung der Drehbewegung des Drehflügels durch auf ihn beispielsweise bei Befüllen des Schüttgutbehälters mit Schüttgut auftreffendes Schüttgut erkennen zu können, ist es bei dem erfindungsgemäßen Verfahren bevorzugt, dass weiterhin eine Drehrichtung des Drehflügels überwacht wird und bei Abweichung der Drehrichtung von einer vorgegebenen Drehrichtung in Abhängigkeit von wenigstens einer Dauer und einer Periodizität der Abweichung eine Hemmung des Drehflügels festgestellt wird.

Bei der erfindungsgemäßen Vorrichtung ist es dazu bevorzugt, dass ein weiterer Drehflügeldrehsensor vorgesehen ist, mit dessen Hilfe eine Drehrichtung des Drehflügels erfassbar ist, und dass die Überwachungsschaltung mit dem weiteren Drehflügeldrehsensor verbunden und so ausgebildet ist, dass eine Drehrichtung des Drehflügels ermittelbar ist und bei Abweichung der Drehrichtung des Drehflügels von einer vorgegebenen Drehrichtung ein Ausnahmezustand feststellbar ist. Damit ist feststellbar, ob es sich um eine Drehbewegung oder um ein Hin- und Herschwingen des Drehflügels handelt. Eine solche Schwingung kann insbesondere dann auftreten, wenn der Drehflügel an einer verlängerten Antriebswelle, beispielsweise in Form eines elastischen Stahlseils, gehalten ist. Bei dem weiteren Drehflügeldrehsensor kann es sich um einen Drehsensor des gleichen Typs handeln, wie er für den Drehsensor zur Feststellung der Hemmung der Drehbewegung verwendet wird, es kann jedoch auch ein anderer Sensortyp verwendet werden. Die Drehrichtung des Drehflügels kann dabei durch eine Verwendung der Signale des Drehflügeldrehsensors und des weiteren Drehflügeldrehsensors oder aus denen des weiteren Drehflügeldrehsensors allein erfolgen.

Bei der vorgegebenen Drehrichtung kann es sich vorzugsweise um die Drehrichtung des Abtriebselements der Antriebsvorrichtung handeln. Besonders bevorzugt kann die Überwachungsschaltung so ausgebildet sein, dass bei Feststellung eines Ausnahmezustands in Abhängigkeit von wenigstens einer Dauer und einer Periodizität der Abweichung der Drehbewegung des Drehflügels von der vorgegebenen Drehrichtung kein Schaltsignal für eine Hemmung der Drehflügelbewegung bzw. ein Erreichen des Füllstands gebildet wird, so dass eine Fehlfunktion durch beispielsweise einseitig auf den Drehflügel auftreffendes Schüttgut verhindert wird.

Die erfindungsgemäße Überwachung der Drehbewegung des Abtriebselementes und die Feststellung einer Hemmung durch Vergleich der Drehbewegung des Drehflügels mit der des Abtriebselementes ist insbesondere vorteilhaft, wenn sich die Drehgeschwindigkeit des Abtriebselementes ändert.

Bei dem Abtriebselementdrehsensor kann es sich um einen Drehsensor des gleichen Typs handeln wie bei dem Drehflügeldrehsensor, es kann jedoch auch ein anderer Typ verwendet werden. Der Abtriebselementdrehsensor kann insbesondere an dem Abtriebselement, anderen mit der Bewegung des Abtriebselements gekoppelten Elementen der Antriebsvorrichtung oder dem mit dem Abtriebselement verbundenen antriebsseitigen Teil der Rutschkupplung angeordnet sein. Selbst größere ungewollte oder gewollte Änderungen der Abtriebselementdrehgeschwindigkeit führen bei dieser Ausführungsform der Erfindung nicht zu einer Beeinträchtigung der Funktion der Füllstandsermittlung.

Zur Erkennung von Störungen ist es bei dem erfindungsgemäßen Verfahren bevorzugt, dass eine Drehbewegung des Abtriebselements überwacht wird und dass eine Störung festgestellt wird, wenn eine ermittelte Abtriebselementdrehgeschwindigkeit nicht in einem vorgegebenen Geschwindigkeitsbereich liegt. Bei der erfindungsgemäßen Vorrichtung ist es bevorzugt, dass ein Abtriebselementdrehsensor zur Ermittlung einer Winkelstellung und/oder Drehbewegung des Abtriebselements und Ausgabe eines entsprechenden Abtriebselementdrehsignals vorgesehen ist, und dass die Überwachungsschaltung mit dem Abtriebselementdrehsensor verbunden und dazu ausgebildet ist, in Abhängigkeit von dem Abtriebselementdrehsignal eine Störung festzustellen, wenn eine ermittelte Abtriebselementdrehgeschwindigkeit nicht in einem vorgegebenen Geschwindigkeitsbereich liegt. Der Abtriebselementdrehsensor kann hierbei wie zuvor beschrieben ausgebildet und/oder angeordnet sein. Der Geschwindigkeitsbereich kann beispielsweise von der Art der Antriebsvorrichtung bzw. den gewählten Betriebsbedingungen abhängen. Hierdurch lässt sich insbesondere ein Ausfall bzw. eine Fehlfunktion der Antriebsvorrichtung sicher diagnostizieren, so dass eine Änderung der Drehbewegung des Drehflügels durch Schüttgut sicher von einer Änderung der Drehgeschwindigkeit des Drehflügels durch eine Funktionsstörung der Antriebsvorrichtung unterscheidbar ist. Bei Feststellung einer solchen Störung kann insbesondere ein entsprechendes Alarmsignal in elektronischer Form an nachfolgende Einrichtungen oder auch in Form von akustischen und/oder optischen Signalen abgegeben werden.

Um eine klare Unterscheidung zwischen erreichtem Füllstand und noch nicht erreichtem Füllstand zu erhalten, sind Rutschkupplungen bevorzugt, bei denen sich das übertragbare Drehmoment in Abhängigkeit von dem angelegten Drehmoment im Bereich des Auslösedrehmoments möglichst stark ändert.

Darüber hinaus ist es bevorzugt, dass das Auslösedrehmoment der Rutschkupplung einstellbar ist, so dass die gleiche erfindungsgemäße Vorrichtung für unterschiedliche Schüttgüter verwendbar ist.

Um einen Verschleiß der erfindungsgemäßen Vorrichtung zu reduzieren und deren Wartungsintervalle zu vergrößern, ist es bevorzugt, dass die Rutschkupplung eine verschleißfreie Rutschkupplung ist. Solche Kupplungen weisen im Allgemeinen nicht nur keinen Verschleiß auf, sondern zeichnen sich auch durch eine besondere mechanische Einfachheit aus.

Besonders bevorzugt kann die Rutschkupplung eine magnetische Rutschkupplung sein, bei der die Übertragung des Drehmoments über Magnetkräfte zwischen zwei gegeneinander drehbaren, mit Magneten ausgestatteten Teilen der Rutschkupplung erfolgt. Insbesondere in dem Fall, dass als Magnete Permanentmagnete verwendet werden, zeichnen sich solche Rutschkupplungen durch sehr hohe Betriebssicherheit und lange Lebensdauer aus. Die Verwendung einer magnetischen Rutschkupplung hat darüber denn Vorteil, dass durch den Aufprall von Schüttgut auf den Drehflügel verursachte Stöße gedämpft werden, wodurch die Antriebsvorrichtung vor entsprechenden Erschütterungen geschützt wird. Besonders bevorzugt weist die magnetische Rutschkupplung zwei gegeneinander drehbare Teile auf, die Magneten zur Übertragung eines Drehmoments zwischen den Teilen aufweisen und deren Abstand zur Einstellung des Auslösedrehmoments einstellbar ist.

Grundsätzlich kann es sich bei den Drehsensoren zur Erfassung einer Drehbewegung um Drehsensoren beliebiger Funktionsweise handeln. Um Verschleiß weitgehend zu vermeiden, ist es bevorzugt, dass wenigstens einer der Drehsensoren ein berührungslos arbeitender Drehsensor ist. Beispielsweise können optische und/oder elektronische Drehsensoren verwendet werden. Optische Drehsensoren können dabei eine Bewegung einer Markierung an dem sich drehenden Teil, beispielsweise einer Markierungsfläche, die in einem vorgegebenen Spektralbereich von der Umgebung unterschiedliche optische Eigenschaften aufweist, erfassen. Insbesondere können sie in der Art von Lichtschranken oder Lichttastern aufgebaut sein.

Besonders bevorzugt umfasst jedoch bei der erfindungsgemäßen Vorrichtung einer der Drehsensoren einen Magnetsensor, d.h. einen Sensor, der zur Erkennung einer Drehbewegung auf sich ändernde magnetische Felder anspricht. Solche Drehsensoren arbeiten berührungslos, unterliegen daher keinem mechanischem Verschleiß und sind nur wenig anfällig gegen Verschmutzung beispielsweise durch Staub. Die Verwendung solcher Drehsensoren erhöht daher die Zuverlässigkeit der erfindungsgemäzein Vorrichtung.

Während grundsätzlich auch induktiv arbeitende Magnetsensoren verwendet werden können, ist es besonders bevorzugt, dass der Magnetsensor ein galvanomagnetischer Sensor ist. Ein solcher Sensor kann beispielsweise ein Magnetwiderstandselement aufweisen, dessen Widerstand von der Größe eines magnetischen Feldes am Ort des Sensors abhängt. Besonders bevorzugt ist der Magnetsensor jedoch als Hall-Sensor ausgebildet. Solche Magnetsensoren finden anderweitig weite Verwendung und sind so leicht erhältlich und bieten gleichzeitig eine gute Empfindlichkeit.

Die Drehsensoren der erfindungsgemäßen Vorrichtung können grundsätzlich mit wenigstens einem an dem Drehflügel oder einem fest mit dem Drehflügel, beispielsweise der Abtriebswelle der Rutschkupplung, verbundenen Element, das mit dem Drehflügel gedreht wird, wechselwirken. Bei optischen Sensoren können hierzu beispielsweise, wie bereits beschrieben, entsprechende Markierungen oder entsprechend angeordnete, beispielsweise gezahnte Impulsgeberräder an dem Drehflügel oder einem mit diesem fest verbundenen Element angeordnet sein. Bei Verwendung von Magnetsensoren können beispielsweise ferromagnetische Vorsprünge, z.B. in Form von gezahnten Impulsgeberrädern, oder auch kleine Magnete an den Drehflügel oder einem mit dem Drehflügel fest verbundenen Element angeordnet sein, wobei entsprechende galvanomagnetische Sensorelemente, insbesondere Hall-Sensoren nahe der Welle zur Erfassung einer durch die ferromagnetischen Vorsprünge oder Magnetelemente hervorgerufenen Magnetfeldänderungen angeordnet ist.

Bevorzugt ist es jedoch, dass die magnetische Rutschkupplung zwei gegerieinander drehbare Teile aufweist, und dass der Magnetsensor so angeordnet ist, dass mit ihm durch Bewegung eines der Teile der magnetischen Rutschkupplung bewirkte Magnetfeldänderungen detektierbar sind. In diesem Fall werden also Magnetfeld erzeugende Teile der Rutschkupplung gleichzeitig zur Übertragung von Drehmomenten und als impulsgebende Elemente für den Magnetsensor verwendet. So können insbesondere galvanomagnetische Sensorelemente; insbesondere Hall-Sensoren, einfach im Bereich der magnetischen Rutschkupplung angeordnet werden, so dass mit ihnen durch die Drehbewegung der zwei gegeneinander drehbaren, durch magnetische Kräfte miteinander gekoppelten Teile erzeugte Magnetfeldänderungen einfach detektierbar sind. Damit ergibt sich ein besonders einfacher und gleichzeitig zuverlässiger Aufbau der erfindungsgemäßen Vorrichtung.

Es ist besonders bevorzugt, dass im Bereich des den Drehflügel antreibenden Teils der Rutschkupplung und im Bereich des mit der Abtriebswelle verbundenen Teils der Rutschkupplung jeweils mindestens ein Hall-Sensor vorgesehen ist, so dass sowohl eine Drehbewegung des Drehflügels als auch eine Drehbewegung der Abtriebswelle des Motors gleichzeitig detektierbar ist.

Weiterhin ist es bevorzugt, dass der Drehflügel lösbar mit einem Abtriebselement der Rutschkupplung verbunden ist. Er kann dann zur Anpassung an andere Schüttgüter oder zur Reparatur leicht ohne Eingriff in den Antrieb ausgetauscht werden.

Bevorzugt verfügt die Vorrichtung über eine Wahlmöglichkeit zwischen verschiedenen Auswerteverfahren. Diese können sich dahingehend unterscheiden, dass entweder eine hohe Ansprechgeschwindigkeit oder eine sehr hohe Fehlertoleranz erreicht wird. Im letzten Fall können beispielsweise kurzzeitige Störungen durch Stöße gegen den Drehflügel nicht als Blockade gelten, aber beispielsweise Drehschwingungsbewegungen des Drehflügels als Hemmung gewertet werden.

Bevorzugt weist die Vorrichtung einen Prozessor zur Durchführung des Auswerteverfahrens sowie eine mit dem Prozessor verbundenen Speichereinrichtung zur dauerhaften Speicherung eines entsprechenden Programms und zur Speicherung von Daten auf. Durch Änderung der Programmierung kann die Vorrichtung auf spezielle Anwendungen hin optimiert werden.

Die Erfindung wird nun beispielhaft anhand der Zeichnungen weiter erläutert. Es zeigen:
- Fig. 1: eine schematische Darstellung einer Vorrichtung zur Ermittlung eines Füllstands in einem Schüttgutbehälter nach einer bevorzugten Ausführungsform der Erfindung,
- Fig. 2: eine schematische Draufsicht auf eine Rutschkupplung und drei Hall-Sensoren der Vorrichtung in Fig. 1
- Fig. 3: eine schematische Darstellung von digitalisierten Ausgangssignalen dreier Hall-Sensoren in der Vorrichtung in Fig. 1 bei freier Drehung eines Drehflügels der Vorrichtung in Fig. 1,
- Fig. 4: eine schematische Darstellung von digitalisierten Ausgangssignalen der drei Hall-Sensoren der Vorrichtung in Fig. 1 bei Hemmung einer Drehbewegung des Drehflügels der Vorrichtung in Fig. 1 durch Schüttgut, und
- Fig. 5: eine schematische Darstellung von digitalisierten Ausgangssignalen der drei Hall-Sensoren der Vorrichtung in Fig. 1 bei einer Drehung des Drehflügels der Vorrichtung in Fig. 1 entgegen einer Drehrichtung einer Antriebsvorrichtung der Vorrichtung in Fig. 1durch einseitiges Auftreffen von Schüttgut auf den Drehflügel.

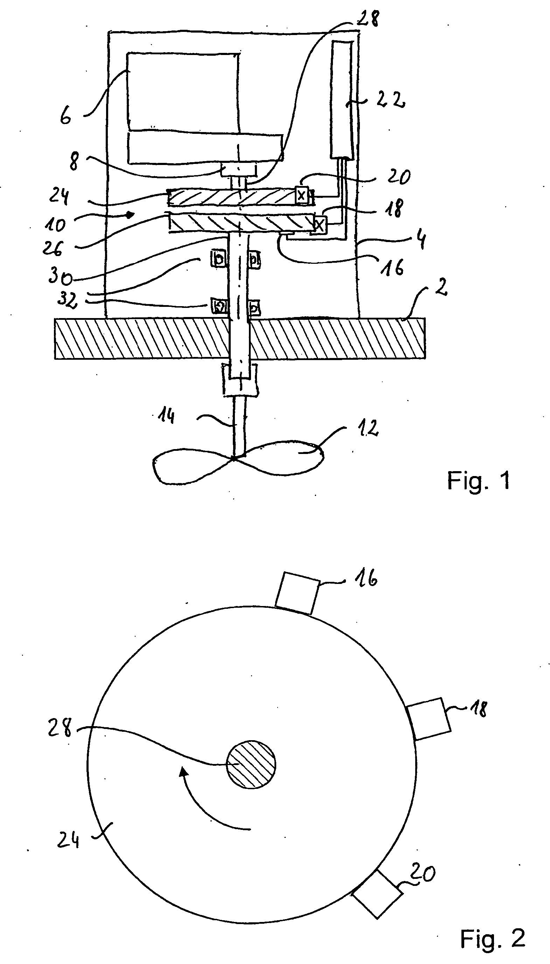

In Fig. 1 ist an einer Wand 2 eines Schüttgutbehälters eine Vorrichtung zur Ermittlung eines Füllstandes von Schüttgut in dem Schüttgutbehälter mit einem an der Wand 2 befestigten Gehäuse 4, einer in dem Gehäuse 4 angeordneten Antriebsvorrichtung 6 mit einem Abtriebsflansch 8, einer mit dem Abtriebsflansch 8 verbundenen magnetischen Rutschkupplung 10 und einem mit der magnetischen Rutschkupplung 10 verbundenen Drehflügel 12 mit einer Antriebswelle 14 befestigt. An der magnetischen Rutschkupplung 10 sind Hall-Sensoren 16, 18 und 20 angeordnet, die mit einer Überwachungsschaltung 22 in dem Gehäuse 4 verbunden sind.

Die Antriebsvorrichtung 6, die an dem Gehäuse 4 als Halterung nicht drehbar befestigt ist, umfasst einen in den Figuren nicht gezeigten Elektromotor, mittels dessen der Abtriebsflansch 8 drehbar ist.

Die magnetische Rutschkupplung 10 umfasst zwei parallel zueinander in einem vorgegebenen Abstand angeordnete Permanentmagnetscheiben 24 und 26, von denen die erste Permanentmagnetscheibe 24 mit einer Kupplungsantriebswelle 28 und die zweite Permanentmagnetscheibe 26 mit einer Kupplungsabtriebswelle 30 verbunden ist.

Die Kupplungsantriebswelle 28, und damit die Permanentmagnetscheibe 24, ist an dem Abtriebsflansch 8 der Antriebsvorrichtung 6 gehalten und mit diesem verbunden, so dass sie mittels der Antriebsvorrichtung 6 drehbar ist.

Zwischen den Permanentmagnetscheiben 24 und 26 sind Drehmomente, die kleiner als ein Auslösedrehmoment sind, durch die magnetischen Kräfte zwischen den in den Flächen der Permanentmagnetscheiben 24 und 26 liegenden Polen der Permanentmagnetscheiben 24 und 26 übertragbar. Das Auslösedrehmoment hängt daher von der Stärke der Permanentmagnetscheiben 24 und 26 und deren Abstand voneinander ab. Dieser Abstand zwischen den Permanentmagnetscheiben 24 und 26 ist einstellbar, so dass das Auslösedrehmoment der magnetischen Rutschkupplung 10 auf einen vorgegebenen Wert einstellbar ist.

Die Kupplungsabtriebswelle 28 ist in zwei Lagern 32 gehalten und tritt durch entsprechende Öffnungen in dem Gehäuse 4 und der Wand 2 in den Innenraum des Schüttgutbehälters ein.

An der Kupplungsabtriebswelle 30 ist mit einer lösbaren Verbindung der Drehflügel 12 mit der Antriebswelle 14 befestigt. Der Drehflügel 12 weist zwei seitlich abstehende Flächen auf, deren Normalen orthogonal zu der Achse der Welle 14 ausgerichtet sind und ist somit zweiarmig ausgebildet. Die Größe der Flächen des Drehflügels 12 ist derart gewählt, dass bei Eintauchen des Drehflügels 12 in eine Schüttung eines vorgegebenen Schüttguts eine signifikante Hemmung einer Drehbewegung des Drehflügels 12 um die Antriebswelle 14 auftritt.

Das Drehmoment der Antriebsvorrichtung 6 an ihrem Abtriebsflansch 8 ist größer als das Auslösedrehmoment der magnetischen Rutschkupplung 10 gewählt, das wiederum in Abhängigkeit von den Eigenschaften des Schüttguts und der Form und Größe der Flächen des Drehflügels 12 so festgelegt ist, dass eine Bewegung des Drehflügels 12 auf oder in einer Schüttung des Schüttguts mit dem Auslösedrehmoment nicht möglich ist.

Dementsprechend ist der Drehflügel 12 durch den Motor 6 über die magnetische Rutschkupplung 10 frei drehbar, wenn sich der Drehflügel 12 nicht in Kontakt mit einer Schüttung des Schüttguts befindet. Bei Kontakt mit einer Schüttung des Schüttguts wird das Auslösedrehmoment der magnetischen Rutschkupplung 10 überschritten, so dass sich der Drehflügel 12 mit der Antriebswelle 14 und der Permanentmagnetscheibe 26 an der Kupplungsabtriebswelle 30 nicht weiter dreht.

Die Hall-Sensoren 16 und 18 sind im Randbereich der Permanentmagnetscheibe 26 angeordnet und dienen als Drehflügeldrehsensoren zur Erfassung einer Drehbewegung und einer Drehrichtung der Permanentmagnetscheibe 26 und damit der damit verbundenen Kupplungsabtriebswelle 30 bzw. des Drehflügels 12. Sie geben jeweils Drehflügeldrehsignale ab, die von der Stärke bzw. Polung des magnetischen Feldes, das von der Permanentmagnetscheibe 26 erzeugt wird, abhängen und damit deren Drehbewegung und -richtung wiedergeben.

Der im Randbereich der Permanentmagnetscheibe 24 angeordnete Hall-Sensor 20 dient als Abtriebselementdrehsensor zur Ermittlung einer Drehbewegung der Permanentmagnetscheibe 24 bzw. der damit verbundenen Kupplungsantriebswelle 28 bzw. des Abtriebsflanschs. Er gibt Abtriebselementdrehsignale ab, die von der Stärke bzw. Polung des magnetischen Feldes, das von der Permanentmagnetscheiben 24 erzeugt wird, abhängen und damit deren Drehbewegung wiedergeben.

In der Ebene der Permanentmagnetscheiben 24 und 26 betrachtet (vgl. Fig. 2) sind die Hall-Sensoren 16, 18 und 20 am Umfang der Permanentmagnetscheiben 24 bzw. 26 jeweils in einem vorgegebenen, von der Polverteilung der Magneten abhängigen Winkelabstand, im Beispiel von etwa 60°, voneinander angeordnet, wobei in einer in Fig. 2 durch einen Pfeil angedeuteten Drehrichtung der Antriebsvorrichtung 6 bzw. des Abtriebsflansches 8 der Hall-Sensor 16 der führende Sensor ist.

Zur Versorgung der Hall-Sensoren 16, 18 und 20 mit Spannung und zur Verarbeitung der davon abgegebenen Drehsignale sind die Hall-Sensoren 16, 18 und 20 mit der Überwachungsschaltung 22 verbunden.

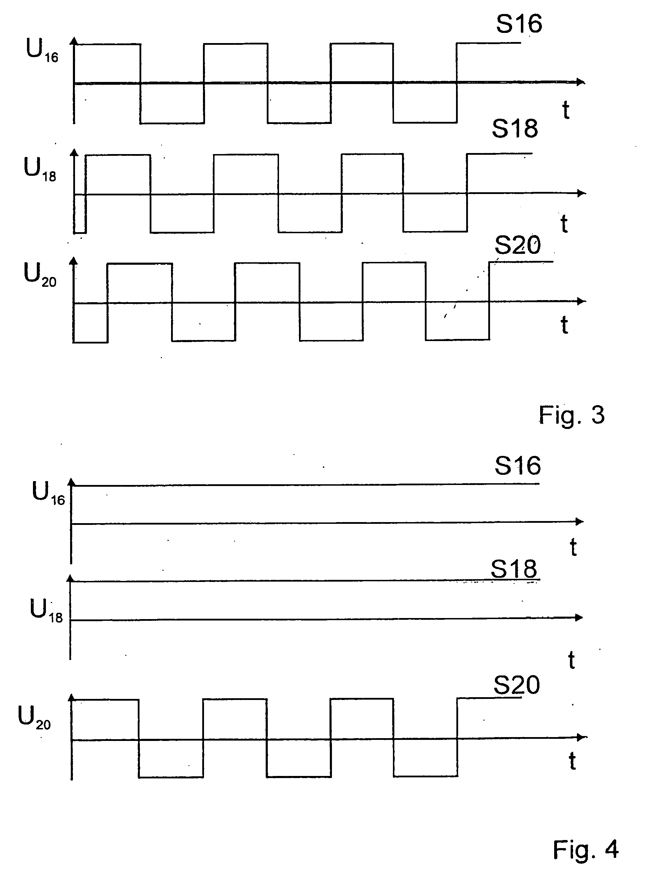

Die von den Hall-Sensoren 16, 18 und 20 abgegebenen digitalen Drehsignale werden in der Überwachungsschaltung 22 aufgenommen und weiterverarbeitet, die dazu einen nicht in den Figuren gezeigten Prozessor und eine mit dem Prozessor verbunden Speichereinrichtung aufweist, in der unter anderem ein Auswerteprogramm zur Verarbeitung der digitalen Drehsignale gespeichert ist. Die digitalen Drehsignale der Hall-Sensoren 16, 18 und 20 sind, mit S16, S18 bzw. S20 bezeichnet, in den Fig. 3 bis 5 für verschiedene Betriebszustände der Vorrichtung gezeigt.

Fig. 3 zeigt schematisch die digitalen Drehsignale der Hall-Sensoren 16, 18 und 20 in Form von Spannungen U₁₆, U₁₈ und U₂₀ als Funktion der Zeit t für den Fall, dass die Drehbewegung des Drehflügels 12 nicht gehemmt ist und dieser sich daher synchron mit dem Abtriebsflansch 8 bzw. der Kupplungsantriebswelle 28 dreht. Durch die Bewegung der Pole der Permanentmagnetscheiben 24 und 26 an den unbeweglich an dem Gehäuse 4 gehaltenen Hall-Sensoren 20 bzw. 16 und 18 vorbei, entstehen jeweils Rechtecksignale, deren Periode gerade der Drehgeschwindigkeit des Abtriebsflanschs 8 bzw. der Kupplungsabtriebswelle 28 und des Drehflügels 12 entspricht. Bedingt durch die um den vorbestimmten Winkel in Bezug auf die Kupplungsantriebswelle 28 bzw. die Kupplungsabtriebswelle 30 gedrehten Positionen der Hall-Sensoren 16, 18 und 20 sind die Signale S16, S18 und S20 gegeneinander verschoben. Im Beispiel ist der Hall-Sensor 16 in Drehrichtung des Abtriebsflanschs 8 der Antriebsvorrichtung 6 vor dem Hall-Sensor 18 angeordnet (vgl. Fig. 2), so dass das Signal S16 dem Signal S18 vorauseilt.

Fig. 4 zeigt in der gleichen Darstellung wie in Fig. 3 die digitalen Drehsignale für einen Betriebszustand, in dem eine Bewegung des Drehflügels 12 durch Schüttgut bei einem der Lage des Drehflügels 12 entsprechenden Füllstand gehemmt ist. Da sich mit dem Drehflügel 12 auch die Kupplungsabtriebswelle 30 und damit die Permanentmagnetscheibe 26 nicht mehr drehen, bewegen sich keine Pole der Permanentmagnetscheibe 26 mehr an den Hall-Sensoren 16 und 18 vorbei, so dass diese, wie in Fig. 3 schematisch gezeigt, ein konstantes Drehsignal abgeben. Da das Auslösedrehmoment der magnetischen Rutschkupplung 10 überschritten wurde, dreht sich der Abtriebsflansch 8 der Antriebsvorrichtung 6 zusammen mit der Kupplungsantriebswelle 28 und der Permanentmagnetscheibe 24 mit konstanter Geschwindigkeit weiter, so dass das digitalisierte Drehsignal S20 des Hall-Sensors 20 im wesentlichen unverändert bleibt.

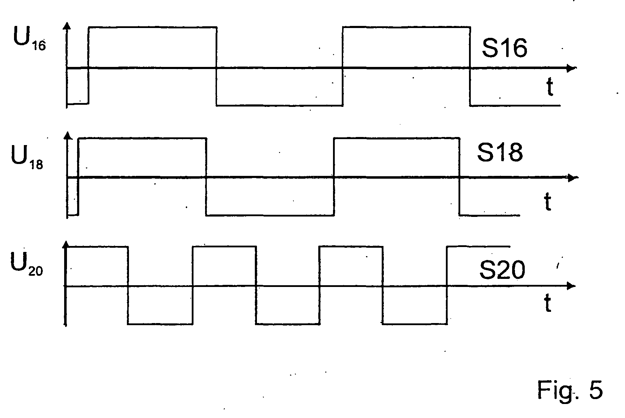

In Fig. 5 sind schließlich in der gleichen Darstellung wie in Fig. 3 die digitalen Drehsignale der Hall-Sensoren 16, 18 und 20 für einen Betriebszustand der Vorrichtung gezeigt, in dem auf den Drehflügel 12 einseitig auftreffendes Schüttgut zu einer Drehung des Drehflügels 12 entgegen der Drehrichtung der Abtriebswelle 8 des Motors 6 führt. Dazu muss das durch das auf dem Drehflügel 12 einseitig auftreffende Schüttgut bewirkte Drehmoment größer als das Auslösedrehmoment der magnetischen Rutschkupplung 10 sein. Der Abtriebsflansch 8 der Antriebsvorrichtung 6 und damit die Kupplungsantriebswelle 28 und die damit verbundene Permanentmagnetscheibe 24 bewegen sich dann weiterhin im Wesentlichen unbeeinflusst, so dass das entsprechende digitalisierte Drehsignal S20 im Wesentlichen, wie in Fig. 4, unverändert bleibt. Durch die Drehung des Drehflügels 12 entgegen der Drehrichtung des Abtriebsflanschs 8 mit einer im Beispiel geringeren Drehgeschwindigkeit dreht sich auch die Permanentmagnetscheibe 26, so dass die Hall-Sensoren 16 und 18 entsprechende digitale Drehsignale abgeben, die die Rechtecksignale S16 und S18 in Fig. 5 bilden. Durch die umgekehrte Drehrichtung eilt nun das Signal S18 dem Signal S16 voraus.

In einem vierten, in den Figuren nicht gezeigten Zustand, in dem die Antriebsvorrichtung ausgefallen ist, bewegen sich die Permanentmagnetscheiben 24 und 26 und auch der Drehflügel 12 nicht, so dass die Drehsignale der Hall-Sensoren 16, 18 und 20 konstant sind.

Die digitalen Drehsignale S16, S18 und S20 werden zur Ermittlung eines Füllstands und Ausgabe eines entsprechenden Signals in der entsprechend ausgebildeten Überwachungsschaltung 22 weiterverarbeitet.

Bei Betrieb der Vorrichtung wird in der Überwachungsschaltung 22 grundsätzlich geprüft, ob das Drehwinkelsignal S20 eine vorgegebene maximale Periode entsprechend einer Mindestdrehgeschwindigkeit der Antriebsvorrichtung 6 hat. Ist dies nicht der Fall, wird ein Störungssignal ausgegeben, das eine Störung anzeigt und ein Alarmsignal auslöst.

Andernfalls werden die im Folgenden geschilderten Verarbeitungsschritte durchgeführt.

Durch Vergleich der Phasenlagen aller drei Signale S16,S18 und S20 der Hall-Sensoren 16, 18 und 20 wird darauf geschlossen bzw. festgestellt, ob sich der Drehflügel 12 entsprechend der Drehrichtung des Abtriebsflanschs 8 dreht oder nicht. Dabei werden durch entsprechende Auswerteverfahren kurzzeitige Störungen der Drehflügelbewegung, wie sie beispielsweise beim Aufschlagen von Schüttgut entstehen können, herausgerechnet. Weiterhin wird erkannt, ob sich der Drehflügel 12, bedingt durch einseitig auftreffendes Schüttgut, rückwärts dreht oder sogar nur hin- und herschwingt.

An einem Signalausgang der Überwachungsschaltung wird dann ein Signal ausgegeben, das den korrigierten und um Fehler bereinigten Zustand "keine Hemmung" oder "Hemmung" des Drehflügels wiedergibt. Bei Vorliegen einer Hemmung ist der Füllstand erreicht.

Es ergibt sich so ein sehr einfaches und zuverlässig arbeitendes Verfahren zur Ermittlung des Füllstands von Schüttgut in einem Schüttgutbehälter, das mittels einer einfachen Vorrichtung durchführbar ist. Insbesondere durch Verwendung einer berührungslosen Rutschkupplung und von berührungslos arbeitenden Drehsensoren arbeitet diese im Wesentlichen verschleißfrei und zuverlässig.

### Bezugszeichenliste

- 2: Wand
- 4: Gehäuse
- 6: Antriebsvorrichtung
- 8: Abtriebsflansch
- 10: magnetische Rutschkupplung
- 12: Drehflügel
- 14: Antriebswelle
- 16: Hall-Sensor
- 18: Hall-Sensor
- 20: Hall-Sensor
- 22: Überwachungsschaltung
- 24: Permanentmagnetscheibe
- 26: Permanentmagnetscheibe
- 28: Kupplungsantriebswelle
- 30: Kupplungsabtriebswelle
- 32: Lager

## Patentansprüche

1. Verfahren zur Ermittlung eines Füllstands von Schüttgut in einem Schüttgutbehälter unter Verwendung einer Antriebsvorrichtung (6) mit einem Abtriebselement (8) und eines wenigstens teilweise in einem Schüttgutbereich des Schüttgutbehälters angeordneten Drehflügels (12), der von dem Abtriebselement (8) antreibbar ist, bei dem das Abtriebselement (8) der Antriebsvorrichtung (6) gedreht wird, eine Drehbewegung des Drehflügels (12) und des Abtriebselementes (8) überwacht wird und
bei Erkennung einer Hemmung der Drehbewegung des Drehflügels (12) ein entsprechendes Schaltsignal gebildet wird,
**dadurch gekennzeichnet, dass**
- der Drehflügel (12) von dem Abtriebselement (8) über eine Rutschkupplung (10), die ein vorgegebenes Auslösedrehmoment aufweist, angetrieben wird,
- die Drehbewegung des Drehflügels (12) und die Drehbewegung des Abtriebselementes (8) überwascht werden, und
- eine Hemmung durch Vergleich der Drehbewegung des Drehflügels (12) mit der des Abtriebselements (8) festgestellt wird.

2. Verfahren nach Anspruch 1,
**dadurch gekennzeichnet,**
**dass** weiterhin eine Drehrichtung des Drehflügels (12) überwacht wird und
**dass** bei Abweichung der Drehrichtung von einer vorgegebenen Drehrichtung in Abhängigkeit von wenigstens einer Dauer und einer Periodizität der Abweichung eine Hemmung des Drehflügels festgestellt wird.

3. Verfahren nach einem der Ansprüche 1 oder 2,
**dadurch gekennzeichnet,**
**dass** eine Störung festgestellt wird, wenn eine ermittelte Abtriebselementdrehgeschwindigkeit nicht in einem vorgegebenen Geschwindigkeitsbereich liegt.

4. Vorrichtung zur Ermittlung eines Füllstands von Schüttgut in einem Schüttgutbehälter, mit
- einer Antriebsvorrichtung (6) mit einem Abtriebselement (8),
- einem Drehflügel (12),
- einer Rutschkupplung (10) mit einem vorgegebenen Auslösedrehmoment, mittels derer das Abtriebselement (8) der Antriebsvorrichtung (6) mit dem Drehflügel (12) gekoppelt ist,
- wenigstens einem Drehflügeldrehsensor (16) zur Ermittlung einer Winkelstellung und/oder Drehbewegung des Drehflügels (12) und zur Ausgabe entsprechender Drehflügeldrehsignale
- einem Abtriebselementdrehsensor (20) zur Ermittlung einer Winkelstellung und/oder Drehbewegung des Abtriebselements (8) und Ausgabe eines entsprechenden Abtriebselementdrehsignals, und
- einer mit dem Drehflügeldrehsensor (16) und dem Abtriebselementdrehsensor (20) verbundenen Überwachungsschaltung (22), mittels derer die Drehflügeldrehsignale des Drehflügeldrehsensors (16) überwachbar sind und mittels derer in Abhängigkeit von den Drehflügeldrehsignalen ein Schaltsignal entsprechend dem Füllstand bildbar ist, wobei die Überwachungsschaltung (22) so ausgebildet ist, dass eine Drehbewegung des Drehflügels (12) in Abhängigkeit von dem Drehflügeldrehsignal und dem Abtriebselementdrehsignal feststellbar ist.

5. Vorrichtung nach Anspruch 4,
**gekennzeichnet durch**
eine Halterung (4), in der die Antriebsvorrichtung (6) unbeweglich gehalten ist.

6. Vorrichtung nach einem der Ansprüche 4 oder 5,
**dadurch gekennzeichnet,**
**dass** ein weiterer Drehflügeldrehsensor (18) vorgesehen ist, mit dessen Hilfe eine Drehrichtung des Drehflügels (12) erfassbar ist, und
**dass** die Überwachungsschaltung (22) mit dem weiteren Drehflügeldrehsensor (18) verbunden und so ausgebildet ist, dass eine Drehrichtung des Drehflügels (12) ermittelbar ist und bei Abweichung der Drehrichtung des Drehflügels (12) von einer vorgegebenen Drehrichtung ein Ausnahmezustand feststellbar ist.

7. Vorrichtung nach einem der Ansprüche 4 bis 6,
**dadurch gekennzeichnet,**
**dass** die Überwachungsschaltung (22) mit dem Abtriebselementdrehsensor (20) verbunden und dazu ausgebildet ist, in Abhängigkeit von dem Abtriebselementdrehsignal eine Störung festzustellen, wenn eine ermittelte Abtriebselementdrehgeschwindigkeit nicht in einem vorgegebenen Geschwindigkeitsbereich liegt.

8. Vorrichtung nach einem der Ansprüche 5 bis 9,
**dadurch gekennzeichnet,**
**dass** die Rutschkupplung (10) eine verschleißfreie Rutschkupplung (10) ist,
und/oder
**dass** das Auslösedrehmoment der Rutschkupplung (10) einstellbar ist,
und/oder
**dass** die Rutschkupplung (10) eine magnetische Rutschkupplung (10) ist.

9. Vorrichtung nach einem der Ansprüche 4 bis 8,
**dadurch gekennzeichnet**,
wenigstens einer der Drehsensoren (16, 18, 20) ein berührungslos arbeitender Drehsensor ist,
wobei einer der Drehsensoren (16, 18, 20) vorzugsweise einen Magnetsensor umfasst, insbesondere einen galvanomagnetischen Sensor oder einen Hallsensor.

10. Vorrichtung nach Anspruch 8 und 9,
**dadurch gekennzeichnet,**
**dass** die magnetische Rutschkupplung (10) zwei gegeneinander drehbare Teile (24, 28; 26, 30) aufweist, und
**dass** der Magnetsensor (20;16, 18) so angeordnet ist, dass mit ihm durch Bewegung eines der Teile (24, 28; 26;30) der magnetischen Rutschkupplung (10) bewirkte Magnetfeldänderungen detektierbar sind.

11. Vorrichtung nach Anspruch 10,
**dadurch gekennzeichnet,**
**dass** im Bereich des den Drehflügel (12) antreibenden Teils (26, 30) der Rutschkupplung (10) und im Bereich des mit dem Abtriebselement (8) verbundenen Teils (24, 28) der Rutschkupplung (10) jeweils mindestens ein Hallsensor (16, 18, 20) vorgesehen ist.

## Claims

1. A method for the determination of a filling level of bulk material in a bulk material container while using a drive apparatus (6) with an output drive element (8) and using a rotating paddle (12) which is arranged at least partly in a bulk material region of the bulk material container and which is drivable by the output drive element (8), wherein the output drive element (8) of the drive apparatus (6) is rotated, a rotational movement of the rotating paddle (12) and of the output drive element (8) is monitored and, on the recognition of a jamming of the rotational movement of the rotating paddle (12), a corresponding switch signal is formed,
**characterised in that**
- the rotating paddle (12) is driven by the output drive element (8) via a slip clutch (10) which has a preset release torque;
- the rotational movement of the rotating paddle (12) and the rotational movement of the output drive element (8) are monitored; and
- a jamming is determined by a comparison of the rotational movement of the rotating paddle (12) with that of the output drive element (8).

2. A method in accordance with claim 1, **characterised in that** a direction of rotation of the rotating paddle (12) is furthermore monitored; and **in that**, on a deviation of the direction of rotation from a preset direction of rotation, a jamming of the rotating paddle is determined in dependence on at least a duration and a periodicity of the deviation.

3. A method in accordance with claim 1 or claim 2, **characterised in that** a malfunction is found when a determined rotational speed of an output drive element does not lie in a preset speed range.

4. An apparatus for the determination of a filling level of bulk material in a bulk material container, comprising
- a drive apparatus (6) with an output drive element (8);
- a rotary paddle (12);
- a slip clutch (10) with a preset release torque by means of which the output drive element (8) of the drive apparatus (6) is coupled to the rotary paddle (12);
- at least one rotational sensor (16) for a rotating paddle for the determination of an angular position and/or of a rotational movement of the rotating paddle (12) and for the outputting of corresponding rotational signals of rotating paddles;
- a rotational sensor (20) for an output drive element for the determination of an angular position and/or of a rotational movement of the output drive element (8) and for the outputting of a corresponding rotational signal for the output drive element; and
- a monitoring circuit (22) which is connected to the rotational sensor (16) for the rotating paddle and to the rotational sensor (20) for the output drive element and by means of which the rotational signals of the rotating paddle of the rotational sensor (16) for the rotating paddle can be monitored and by means of which a switching signal corresponding to the filling level can be formed in dependence on the rotational signals of the rotating paddle, with the monitoring circuit (22) being formed such that a rotational movement of the rotating paddle (12) can be determined in dependence on the rotational signal of the rotating paddle and the rotational signal of the output drive element.

5. An apparatus in accordance with claim 4, **characterized by** a holder (4) in which the drive apparatus (6) is immovably held.

6. An apparatus in accordance with any one of claims 4 or 5, **characterised in that** a further rotational sensor (18) for the rotating paddle is provided with whose help a direction of rotation of the rotating paddle (12) can be detected; and **in that** the monitoring circuit (22) is connected to the further rotational sensor (18) for the rotating paddle and is made such that a direction of rotation of the rotating paddle (12) can be determined and a state of emergency can be determined on a deviation of the direction of rotation of the rotating paddle (12) from a preset direction of rotation.

7. An apparatus in accordance with any one of the claims 4 to 6, **characterised in that** the monitoring circuit (22) is connected to the rotational sensor (20) for the output drive element and is designed to determine a malfunction in dependence on the rotational signal of the output drive element when a determined rotational speed of the output drive element does not lie in a preset speed range.

8. An apparatus in accordance with any one of the claims 4 to 7, **characterised in that** the slip clutch (10) is a non-wear slip clutch (10);
and/or
**in that** the release torque of the slip clutch (10) is adjustable:
and / or
**in that** the slip clutch (10) is a magnetic slip clutch (10).

9. An apparatus in accordance with any one of the claims 4 to 8, **characterised in that** at least one of the rotational sensors (16, 18, 20) is a rotational sensor operating in a non-contact manner, wherein one of the rotational sensors (16, 18, 20) preferably comprises a magnetic sensor, in particular a galvomagnetic sensor or a Hall sensor.

10. An apparatus in accordance with claim 8 and claim 9, **characterised in that** the magnetic slip clutch (10) has two parts (24, 28; 26, 30) which are rotatable with respect to one another; and **in that** the magnetic sensor (20; 16, 18) is arranged such that changes to the magnetic field effected by a movement of one of the parts (24, 28; 26; 30) of the magnetic slip clutch (10) can be detected by it.

11. An apparatus in accordance with claim 10, **characterised in that** at least one Hall sensor (16, 18, 20) is respectively provided in the region of the part (26, 30) of the slip clutch (10) driving the rotary paddle (12) and in the region of the part (24, 28) of the slip clutch (10) connected to the output drive element (8).

## Revendications

1. Procédé de détermination du niveau de remplissage de matières en vrac dans un conteneur à matières en vrac, en utilisant un dispositif d'entraînement (6) muni d'un élément mené (8) et une pale tournante (12) agencée au moins partiellement dans une zone de matières en vrac du conteneur à matières en vrac et susceptible d'être entraînée par l'élément mené (8), dans lequel on fait tourner l'élément mené (8) du dispositif d'entraînement (6), on surveille un mouvement de rotation de la pale tournante (12) et de l'élément mené (8) et
lors de la reconnaissance d'un empêchement du mouvement de rotation de la pale tournante (12), on forme un signal de commutation correspondant,
**caractérisé en ce que**
- la pale tournante (12) est entraînée par l'élément mené (8) via un accouplement à glissement (10) qui présente un couple de rotation de déclenchement prédéterminé,
- on surveille le mouvement de rotation de la pale tournante (12) et le mouvement de rotation de l'élément mené (8), et
- on constate un empêchement par comparaison du mouvement de rotation de la pale tournante (12) à celui de l'élément mené (8).

2. Procédé selon la revendication 1,
**caractérisé en ce que**
on surveille en outre une direction de rotation de la pale tournante (12), et
en cas d'écart entre la direction de rotation et une direction de rotation prédéterminée, en fonction d'au moins une durée et d'une périodicité de l'écart, on constate un empêchement de la pale tournante.

3. Procédé selon l'une des revendications 1 ou 2,
**caractérisé en ce que**
l'on constate une perturbation lorsque la vitesse de rotation détectée de l'élément mené ne se situe pas dans une plage de vitesse prédéterminée.

4. Dispositif de détection d'un niveau de remplissage de matières en vrac dans un conteneur à matières en vrac, comportant
- un dispositif d'entraînement (6) muni d'un élément mené (8),
- une pale tournante (12),
- un accouplement à glissement (10) présentant un couple de rotation de déclenchement prédéterminé, au moyen duquel l'élément mené (8) du dispositif d'entraînement (6) est accouplé à la pale tournante (12),
- au moins un détecteur de rotation de pale tournante (16) destiné à détecter une position angulaire et/ou un mouvement de rotation de la pale tournante (12) et à émettre des signaux de rotation de pale tournante correspondants,
- un détecteur de rotation d'élément mené (20) destiné à détecter une position angulaire et/ou un mouvement de rotation de l'élément mené (8), et à émettre un signal de rotation d'élément mené correspondant, et
- un circuit de surveillance (22) connecté au détecteur de rotation de pale tournante (16) et au détecteur de rotation d'élément mené (20), circuit qui permet de surveiller les signaux de rotation de pale tournante du détecteur de rotation de pale tournante (16) et qui permet de former un signal de commutation en correspondance du niveau de remplissage en fonction des signaux de rotation de pale tournante, le circuit de surveillance (22) étant réalisé de telle sorte qu'un mouvement de rotation de la pale tournante (12) peut être constaté en fonction du signal de rotation de pale tournante et du signal de rotation d'élément mené.

5. Dispositif selon la revendication 4,
**caractérisé par**
une monture (4) dans laquelle le dispositif d'entraînement (6) est retenu de façon immobile.

6. Dispositif selon l'une des revendications 4 ou 5,
**caractérisé en ce que**
il est prévu un autre détecteur de rotation de pale tournante (18) qui permet de détecter une direction de rotation de la ale tournante (12), et **en ce que** le circuit de surveillance (22) est connecté à l'autre détecteur de rotation de pale tournante (18) et réalisé de manière à permettre de détecter une direction de rotation de la pale tournante (12), et en cas d'écart entre la direction de rotation de la pale tournante (12) et une direction de rotation prédéterminée, un état d'exception peut être constaté.

7. Dispositif selon l'une des revendications 4 à 6,
**caractérisé en ce que**
le circuit de surveillance (22) est connecté au détecteur de rotation d'élément mené (20) et réalisé pour constater une perturbation en fonction du signal de rotation d'élément mené si une vitesse de rotation d'élément mené détectée ne se situe pas dans une plage de vitesse prédéterminée.

8. Dispositif selon l'une des revendications 5 à 9,
**caractérisé en ce que**
l'accouplement à glissement (10) est un accouplement à glissement (10) inusable,
et/ou
le couple de rotation de déclenchement de l'accouplement à glissement (10) est réglable,
et/ou
l'accouplement à glissement (10) est un accouplement à glissement (10) magnétique.

9. Dispositif selon l'une des revendications 4 à 8,
**caractérisé en ce que**
l'un au moins des détecteurs de rotation (16, 18, 20) est un détecteur de rotation qui fonctionne sans contact physique,
l'un des détecteurs de rotation (16, 18, 20) comprenant de préférence un détecteur magnétique, en particulier un détecteur galvano-magnétique ou un détecteur de Hall.

10. Dispositif selon la revendication 8 et 9,
**caractérisé en ce que**
l'accouplement à glissement (10) magnétique comprend deux parties (24, 28 ; 26, 30) rotatives l'une par rapport à l'autre, et
**en ce que** le détecteur magnétique (20 ; 16, 18) est agencé de manière à permettre de détecter des modifications du champ magnétique causées par un mouvement de l'une des parties (24, 28 ; 26 ; 30) de l'accouplement à glissement (10) magnétique.

11. Dispositif selon la revendication 10,
**caractérisé en ce que**
il est prévu au moins un détecteur de Hall (16, 18, 20) respectivement dans la zone de la partie (26, 30) de l'accouplement à glissement (10) qui entraîne la pale tournante (12), et dans la zone de la partie (24, 28) de l'accouplement à glissement (10) reliée à l'élément mené (8).
